# EUROPÄISCHE PATENTSCHRIFT

(11) **EP 1 321 284 B1**
(45) Veröffentlichungstag und Bekanntmachung des Hinweises auf die Patenterteilung: **14.06.2006**
(21) Anmeldenummer: 02022602.3
(22) Anmeldetag: 09.10.2002
(51) Int. Cl.: B29D 23/00, B29C 35/02, F16L 11/00, F16L 11/04, F16L 11/12

(54) **Verfahren zur Herstellung eines vulkanisierten gekrümmten Schlauchs in einer Negativform unter Verwendung einer temporären Schlauchummantelung**
Method of manufacture of a vulcanized curved hose in a mould using a temporary hose sheath
Procédé de fabrication d'un tuyau flexible coudé et vulcanisé dans un moule en utilisant une gaine de tuyau temporaire

(30) Priorität: 19.12.2001 DE 10162294
(43) Veröffentlichungstag der Anmeldung: 25.06.2003
(73) Patentinhaber: ContiTech Schlauch GmbH, 30165 Hannover (DE)
(72) Erfinder: Pohlmann, Reinhard, 34497 Korbach (DE); Wolf, Michael, 34497 Korbach (DE); Besche, Anton, 34497 Korbach (DE); Füllgrabe, Manfred, 34497 Korbach (DE)
(74) Vertreter: Finger, Karsten

(56) Entgegenhaltungen:
- EP-A- 0 161 509
- DE-A- 1 937 945
- DE-A- 1 965 670
- DE-A- 2 419 256
- DE-A- 10 036 235
- DE-A- 19 527 182
- DE-C- 19 909 409
- DE-C- 19 912 304
- GB-A- 1 358 273
- JP-A- 3 199 034
- US-A- 3 255 284
- US-A- 3 883 384
- US-A- 4 559 095
- US-A- 4 882 101

## Beschreibung

Die Erfindung betrifft ein Verfahren zur Herstellung von Krümmerschläuchen nach dem Oberbegriff des Anspruchs 1.

Ein Verfahren zur Herstellung von Krümmerschläuchen ist aus der gattungsbildenden DE 195 27 182 A1 bekannt. Da die Negativform zum Einlegen und Herausnehmen des Schlauchrohlings aber teilbar sein muss, wurde festgestellt, dass sich die Teilungsfugen auf der Oberfläche des fertigen Krümmerschlauches abbilden, wodurch eine Qualitätsminderung eintritt. Weichen die Maßtoleranzen zwischen der Negativform und dem Schlauchrohling in dem Sinne voneinander ab, dass der Schlauchrohling ein Untermaß besitzt, ergibt sich einerseits eine zerklüftete Oberfläche, zum anderen wird der zum Vulkanisieren nötige Druck auf den Schlauchrohling nicht homogen über den gesamten Schlauchabschnitt erzeugt, so dass die Vulkanisation ungleichmäßig ist, wodurch die Reproduzierbarkeit und Qualität leidet. Ein Umwickeln des Schlauchrohlings bietet keinen Ausweg aus der Problematik, da sich einerseits enge Krümmungsradien nicht realisieren lassen und sich andererseits auch bei großen Krümmungsradien das Stützband auf der Oberfläche des Krümmerschlauches abbildet.

Auch ein Vorvulkanisieren des noch geraden Schlauchrohlings hat sich als nachteilig erwiesen. Die durch die Negativform gewünschte Formgebung ist nach dem Endvulkanisieren nicht mehr beständig, da der Krümmerschlauch nach dem Herausnehmen aus der Negativform und Abkühlen dann eine andere Form seines Achsenverlaufs annimmt als durch die Negativform vorgegeben wurde.

Bei einem aus der EP-A2-0161 509 bekannten Verfahren zur Herstellung von nicht gekrümmten Schläuchen geht man von einem quasi endlos extrudierten Rohling aus, der dann als Ganzes in einer Ummantelung vulkanisiert wird, die - wie beim bekannten sogenannnten Bleimantel-Verfahren - die Vulkanisationsform bildet, die jedoch nicht aus Blei, sondern aus einem speziellen recycelbaren thermoplastischen Kunststoff besteht. In ähnlicher Weise wird gemäß DE-A-1 965 670 eine Ummantelung des Schlauchrohlings aus einem im plastifizierten Zustand aufgebrachten Kunststoff verwendet.

Dasselbe Verfahrensprintip ist in der US-A-3 883 384 - und ähnlich auch in der GB-A-1 358 273 - beschrieben, wobei die Ummantelung aus einem flexiblen, nicht vulkanisierbaren Werkstoff gebildet werden soll, der nach der Vulkanisation des Schlauches abgenommen und wiederverwendet werden kann.

Ferner ist es aus der US-A-4 559 095 bekannt, endlose elastomere Schlauchrohlinge in einer aus einem thermoplastischen Kunststoff gebildeten Ummantelung zu vulkanisieren, wobei insbesondere die Möglichkeit vorgesehen ist, die Vulkanisationswärme durch Mikrowellen zu erzeugen.

Nach einem Verfahren, das dem Dokument JP-03 199 034 entnehmbar ist, können Krümmerschläuche hergestellt werden, indem man auf einem thermoplastischen Kunststoffdorn einen elastomeren Schlauchrohling aufbaut, diesen mit thermoplastischem Kunststoff ummantelt, samt Dorn ablängt und in einer Negativform vulkanisiert. Um die Kunststoffummantelung anschließend von den vulkanisierten Schlauchabschnitten trennen zu könnten, werden sie gefroren und dann abgepellt, und schließlich werden die Domabschnitte entfernt.

Die DE-A-1 937 945 beschreibt ein Verfahren zur Herstellung flexibler langer Schläuche, bei dem auf einem Dom, der beispielsweise aus Nylon bestehen und flexibel sein kann, in üblicher Weise ein Schlauchrohling aufgebaut wird. Dieser Schlauchrohling wird dann zur Abwehr schädlicher äußerer Einwirkungen mit einer - ausdrücklich dünnen - Schutzschicht aus dehnbarem Gummi umhüllt, und anschließend wird er vulkanisiert. Danach wird die Schutzschicht vom Schlauch abgezogen, und der Dorn wird entfernt. Wie sich gezeigt hat, ist es nicht möglich, mittels einer dünnen Schutzschicht der in diesem Dokument beschriebenen Art, von außen her einen ausreichend hohen, gleichmäßigen Vulkanisalionsdruck auf den Schlauchrohling zu auszuüben, um dadurch die Homogenität der Vulkanisation des Schlauches unter allen Umständen reproduzierbar zu gewährleistet.

Der Erfindung liegt die Aufgabe zugrunde, das eingangs genannte Verfahren dahingehend zu verbessern, Krümmerschläuche mit einem reproduzierbaren definierten Achsenverlauf bei gleichzeitig homogener Vulkanisation und glatter Außen- und Innenfläche herzustellen.

Diese Aufgabe wird bei einem Verfahren nach dem Oberbegriff des Anspruchs 1 durch die Merkmale dieses Anspruchs gelöst.

Weiterbildungen und vorteilhafte Ausgestaltungen ergeben sich aus den Unteransprüchen.

Durch Aufziehen eines Stützmantels auf den Schlauchrohling wird auch von außen her ein Druck auf den Schlauchrohling erzeugt. Der Stützmantel kann in an sich bekannter Weise mit glatter Innenoberfläche hergestellt werden, wodurch sich nach dem Vulkanisieren des Schlauchrohlings eine glatte Oberflächenkontur ergibt. Da der Stützmantel beim Vulkanisieren einen gleichmäßigen Außendruck auf den Schlauchrohling ausübt, wird eine homogene Vulkanisation erreicht. Der Stützmantel folgt der gewünschten Achsenkrümmung und beeinträchtigt somit nicht kleine Krümmungsradien. Dadurch kann bei jedem gewünschten Krümmungsradius der Krümmerschläuche eine homogene Vulkanisation und damit eine reproduzierbare Qualität erreicht werden. Gleichzeitig werden Toleranzen zwischen der Negativform und dem Schlauchrohling ausgeglichen, und es erfolgt keine Abbildung der Trennflächen der Negativform auf den Schlauchrohling und den endgültigen Krümmerschlauch. Da eine Vorvulkanisation entfällt und die Vulkanisation in einem Arbeitsgang erfolgen kann, wird einmal das Herstellungsverfahren vereinfacht und zum anderen die Formstabilität der Krümmerschläuche entsprechend der gewählten Kontur der Negativform gewahrt.

Erfindungsgemäß wird als Stützmantel ein Elastomer verwendet, der Innendurchmesser des Stützmantels im entspannten Zustand ist kleiner als der Außendurchmesser des Schlauchrohlings, und der Stützmantel wird während des Aufziehens auf den Schlauchrohling aufgebläht und nach dem Aufziehen entspannt, worauf sich die Innenfläche des Stützmantels an die Außenfläche des Schlauchrohlings unter Druck anlegt.

Durch diese Maßnahme wird das Aufziehen eines Stützmantels ermöglicht, der im entspannten Zustand einen kleineren Innendurchmesser im Vergleich zum Außendurchmesser des Schlauchrohlings aufweist. Durch das Aufblähen des Stützmantels wird das Aufziehen dabei ohne mechanische Belastung und Beeinträchtigung des Schlauchrohlings ermöglicht. Nach dem Aufziehen und Entspannen des Stützmantels wird bereits ein gleichmäßiger Druck auf den Schlauchrohling ausgeübt, der beim späteren Vulkanisieren genutzt werden kann, um einmal eine Zerklüftung der Oberfläche des Schlauchrohlings zu verhindern und andererseits die Dauer und/oder Temperatur beim Vulkanisiervorgang geringer zu halten.

Ergänzend kann vorgesehen sein, dass auf den Dorn vor Aufbringen des Schlauchrohlings eine Folie extrudiert wird, die mit dem Schlauchrohling verbunden wird und nach Entfernen des Dorns im Krümmerschlauch verbleibt.

Diese Folie gewährleistet eine faltenfreie Innenfläche des Krümmerschlauchs und reduziert so Strömungswiderstände bei Nutzung der Krümmerschläuche in pneumatischen oder hydraulischen Anlagen, aber auch Schädigungen des Krümmerschlauches in Folge sonst möglicher Falten, die zu Auswaschungen führen können.

Darüber hinaus gelingt es, durch die Folie bereits eine Dichtigkeit gegen das zu führende Medium zu erreichen, ohne dabei Rücksicht auf eine eventuelle Unverträglichkeit der Medien gegenüber dem übrigen Material des Krümmerschlauchs nehmen zu müssen. Vielmehr kann das Material des Krümmerschlauchs, also insbesondere das Gummi, überwiegend nach anderen Parametern, wie z. B. Elastizität, Druckfestigkeit und Temperaturfestigkeit ausgelegt werden.

Gemäß einer Weiterbildung wird als Dorn ein Hohldorn verwendet und der Schlauchrohling auch von der Innenseite des Dorns her mit dem zum Vulkanisieren eingesetzten Trägermedium temperatur- und druckbeaufschlagt.

Dadurch wird die zeitgleiche und gleichmäßige Vulkanisation des gesamten Schlauchmaterials ermöglicht und zudem eine Verkürzung der Vulkanisationsdauer erreicht, da die Wärmeleitung nicht ausschließlich von außen her über die Negativform erfolgen muss.

Weiterhin ist vorgesehen, dass der Schlauchrohling mit dem im Inneren befindlichen Dorn und dem Stützmantel vor Einlegen in die Negativform vorgewärmt wird. Bei Ausbildung des Dorns als Hohldorn kann dies durch eine in den Hohldorn eingeschobene Heizvorrichtung, z. B. einen Heizstab, oder durch ein den Hohldorn durchströmendes Wärmeträgermedium erfolgen.

Diese Maßnahme, die noch zu keiner Vulkanisation führt, verringert zunächst die Steifigkeit aus der Anordnung von Schlauchrohling, dem im Inneren befindlichen Dorn und dem Stützmantel und erleichtert somit das Einlegen in die Negativform. Wird diese Maßnahme manuell durchgeführt, so stellt dies eine erhebliche Entlastung für das Produktionspersonal dar, das ja im Verlauf der Arbeitszeit eine Vielzahl von Schlauchrohlingen in die Negativform einsetzen muss.

Vorzugsweise wird als Stützmantel ein Elastomer-Werkstoff verwendet. Besonders geeignet ist hierfür ein Acrylnitril-Butadien-Katschuck, der nach DIN ISO 1629 auch unter Kurzbezeichnung NBR bekannt ist.

Dieser Werkstoff sorgt dafür, dass bei den Vulkanisationstemperaturen der notwendige Außendruck auf den Schlauchrohling aufrechterhalten wird.

Nachfolgend wird die Erfindung anhand eines Ausführungsbeispiels erläutert, das in der Zeichnung dargestellt ist.

In der Zeichnung zeigen:
- Fig. 1: ein Beispiel für eine Halbform der Negativform und
- Fig. 2: einen Querschnitt durch eine aus zwei Halbformen gebildete Nega-tivform, in der ein Schlauchrohling mit innen liegendem Dorn und außen liegendem Stützmantel eingelegt ist.

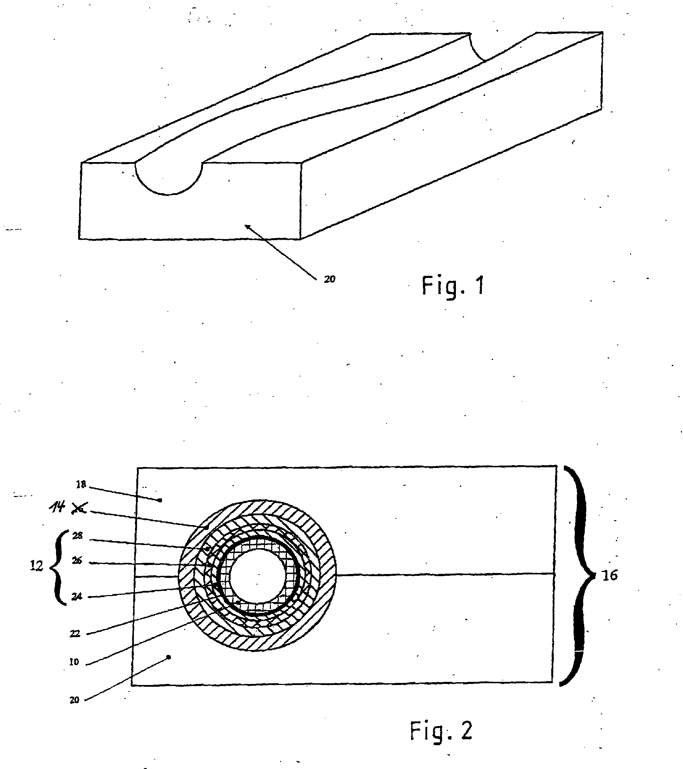

Die in Fig. 1 dargestellte Halbform 20 besteht aus einem gut wärmeleitenden Material, z. B. Aluminium, in die die Kontur eines zu fertigenden Krümmerschlauches unter Berücksichtigung der Außenfläche eines zusätzlichen Stützmantels 14 eingefräst ist. Diese Form erstreckt sich über den gesamten Längenabschnitt des zu fertigenden Krümmerschlauches.

Die Halbform 20 wird durch eine entsprechende komplementäre, in Fig. 1 nicht dargestellte Halbform 18 ergänzt, die nach Einlegen eines Schlauchrohlings 12 mit dem im Inneren befindlichen Dorn 10 und dem darüber gezogenen Stützmantel 14 auf die dargestellte Halbform 20 aufgelegt wird und damit den Stützmantel 14 einseitig umschließt.

Fig. 2 zeigt einen Querschnitt durch die geschlossene Form aus zwei Halbformen 18, 20, in die ein Schlauchrohling 12 mit einem im Inneren angeordneten Dorn 10 und einem äußeren Stützmantel 14 eingelegt ist.

Bei der Herstellung wird zunächst auf einen geraden Hohldorn, der z. B. aus einem temperaturbeständigen Kunststoff bestehen kann, in einem Endlosverfahren eine Folie 22 extrudiert. Diese Folie 22 bildet später die Auskleidung des fertigen Krümmerschlauches.

Auf die Folie 22 wird nach Aufbringen eines Haftvermittlers eine Innenschicht 24 aus Gummi extrudiert. Anschließend werden ein Haftvermittler und ein Festigkeitsträger 26 aufgebracht. Dieser kann z. B. ein Geflecht aus Textilfasern sein. Nach Aufbringen eines weiteren Haftvermittlers wird eine Außenschicht 28 aus Gummi extrudiert und danach der Endlos-Schlauchrohling zusammen mit dem im Inneren befindlichen Kunststoffdorf auf die vorbestimmte Länge geschnitten.

Anschließend wird ein Stützmantel 14 über den Schlauchrohling 12 gezogen, der sich über die gesamte Länge des geschnittenen Abschnitts des Schlauchrohlings 12 erstreckt. Dies geschieht dadurch, dass zunächst der vorgefertigte Stützmantel 14 durch ein Druckmedium zwischen Schlauchrohling 12 und Stützmantel 14 aufgebläht und dabei der Stützmantel 14 und der Schlauchrohling 12 axial gegeneinander verschoben werden, bis der Stützmantel 14 den Schlauchrohling 12 vollständig überdeckt. Daraufhin wird das Druckmedium entfernt, worauf sich der Stützmantel 14 unter Druck an den Schlauchrohling 12 anlegt.

Danach wird die Kombination aus Schlauchrohling 12, Dorn 10 und Stützmantel 14 vorgewärmt und in die Halbform 20 gelegt. Nach Auflegen der weiteren komplementären Halbform 18, die sich dann beide zu einer Negativform 16 ergänzen, erfolgt eine Vulkanisation in einem üblichen Vulkanisationskessel. Nach Ende der Vulkanisation wird die eine Halbform 18 entfernt und der Krümmerschlauch in seiner jetzt endgültigen Form des Achsenverlaufs aus der Halbform 20 entnommen und der Dorn 10 sowie der Stützmantel 14 entfernt, wonach die Herstellung abgeschlossen ist.

### Bezugszeichenliste

- 10: Dorn
- 12: Schlauchrohling
- 14: Stützmantel
- 16: Negativform
- 18: obere Halbform
- 20: untere Halbform
- 22: Folie
- 24: Innenschicht
- 26: Festigkeitsträger
- 28: Außenschicht

## Patentansprüche

1. Verfahren zur Herstellung von Krümmerschläuchen, wobei ein Schlauchrohling (12) auf einen flexiblen Dorn (10) aufgebracht wird, der Schlauchrohling (12) mit dem im Innern befindlichen Dorn (10) auf eine vorbestimmte Länge geschnitten wird, der Abschnitt des Schlauchrohlings (12) mit dem im Innern befindlichen Dorn (10) in eine Negativform (16) eingelegt, vulkanisiert und wieder aus der Negativform (16) entnommen wird und der Dorn (10) aus dem innern des fertigen Krümmerschlauchs entfernt wird,
**dadurch gekennzeichnet,**
a.) dass vor Einlegen des auf die vorbestimmte Länge geschnittenen Schlauchrohlings (12) in die Negativform (16) ein Stützmantel (14) über den Schlauchrohling (12) aufgezogen und gemeinsam mit dem Schlauchrohling (12) und dem im Innern befindlichen Dorn (10) in eine dem Außendurchmesser des Stützmantels (14) angepasste Negativform (16) eingelegt wird,
b.) dass als Stützmantel (14) ein Elastomer verwendet wird,
c.) dass der Innendurchmesser des Stützmantels (14) im entspannten Zustand kleiner als der Außendurchmesser des Schlauchrohlings (12) ist und der Stützmantel (14) während des Aufziehens auf den Schlauchrohling (12) aufgebläht und nach dem Aufziehen entspannt wird, worauf sich die Innenfläche des Stützmantels (14) an die Außenfläche des Schlauchrohlings (12) unter Druck anlegt und
d.) dass der Schlauchrohling (12) in der Negativform (16) ohne vorherige Vorvulkanisation in einem Arbeitsgang vulkanisiert wird und nach Entnahme aus der Negativform (16) zusätzlich der Stützmantel (14) entfernt wird.

2. Verfahren nach Anspruch 1, **dadurch gekennzeichnet, dass** auf den Dorn (10) vor Aufbringen des Schlauchrohlings (12) eine Folie extrudiert wird, die mit dem Schlauchrohling (12) verbunden wird und nach Entfernen des Dorns (10) im Krümmerschlauch verbleibt.

3. Verfahren nach einem der Ansprüche 1 oder 2, **dadurch gekennzeichnet, dass** als Dorn (10) ein Hohldorn verwendet wird und der Schlauchrohling (12) auch von der Innenseite des Dorns (10) her mit dem zum Vulkanisieren eingesetzte Trägermedium temperatur- und druckbeaufschlagt wird.

4. Verfahren nach einem der Ansprüche 1 bis 3, **dadurch gekennzeichnet, dass** der Schlauchrohling (12) mit dem im Inneren befindlichen Dorn (10) und dem Stützmantel (14) vor Einlegen in die Negativform (16) vorgewärmt wird.

5. Verfahren nach einem der Ansprüche 1 bis 4, **dadurch gekennzeichnet, dass** bei Ausbildung des im Inneren befindlichen Dorns (10) als Hohldorn der Schlauchrohling (12) mit dem Dorn (10) und dem Stützmantel (14) vor Einlegen in die Negativform (16) durch eine in den Hohldorn eingeschobene Heizvorrichtung oder durch ein den Hohldorn durchströmendes Wärmeträgermedium vorgewärmt wird.

6. Verfahren nach einem der Ansprüche 1 bis 5, **dadurch gekennzeichnet, dass** als Werkstoff des Stützmantels (14) ein Acrylnitril-Butadien-Kautschuk verwendet wird.

## Claims

1. Method of manufacture of curved hoses, a hose blank (12) being applied to a flexible mandrel (10), the hose blank (12) with the mandrel (10) inside being cut to a predetermined length, the portion of the hose blank (12) with the mandrel (10) inside being placed in a negative mould (16), vulcanized and removed again from the negative mould (16) and the mandrel (10) being removed from inside the finished curved hose,
**characterized**
a.) in that, before placing the hose blank (12), cut to a predetermined length, in the negative mould (16), a supporting sheath (14) is drawn over the hose blank (12) and placed together with the hose blank (12) and the mandrel (10) located inside in a negative mould (16) adapted to the outside diameter of the supporting sheath (14),
b.) in that an elastomer is used as the supporting sheath (14),
c.) in that the inside diameter of the supporting sheath (14) in the relaxed state is less than the outside diameter of the hose blank (12), and the supporting sheath (14) is inflated as it is being drawn onto the hose blank (12) and allowed to relax after being drawn on, whereby the inner surface of the supporting sheath (14) comes to lie against the outer surface of the hose blank (12) under pressure and
d.) in that the hose blank (12) is vulcanized in the negative mould (16) without prior pre-vulcanization in one operation and, after removal from the negative mould (16), the supporting sheath (14) is additionally removed.

2. Method according to Claim 1, **characterized in that**, before the hose blank (12) is applied, the mandrel (10) has extruded onto it a film which is joined to the hose blank (12) and remains in the curved hose after removal of the mandrel (10).

3. Method according to either of Claims 1 and 2, **characterized in that** a hollow mandrel is used as the mandrel (10) and the hose blank (12) is subjected to temperature and pressure by the transfer medium used for the vulcanizing also from the inner side of the mandrel (10).

4. Method according to one of Claims 1 to 3, **characterized in that** the hose blank (12) with the mandrel (10) inside and the supporting sheath (14) is preheated before being placed in the negative mould (16).

5. Method according to one of Claims 1 to 4, **characterized in that**, when the mandrel (10) located inside is formed as a hollow mandrel, the hose blank (12) with the mandrel (10) and the supporting sheath (14) is preheated before being placed in the negative mould (16) by a heating device pushed into the hollow mandrel or by a heat transfer medium flowing through the hollow mandrel.

6. Method according to one of Claims 1 to 5, **characterized in that** an acrylonitrile/butadiene rubber is used as the material for the supporting sheath (14).

## Revendications

1. Procédé de fabrication de tuyaux flexibles coudés, dans lequel une ébauche de tuyau (12) est placée sur un mandrin flexible (10), l'ébauche de tuyau (12) est coupée à une longueur prédéterminée avec le mandrin (10) situé à l'intérieur, la portion de l'ébauche de tuyau (12) avec le mandrin (10) se trouvant à l'intérieur est introduite dans un moule négatif (16), vulcanisée, puis à nouveau ressortie du moule négatif (16) et le mandrin (10) est retiré de l'intérieur du tuyau flexible coudé fini,
**caractérisé en ce que**
a) avant l'introduction de l'ébauche de tuyau (12) coupée à la longueur prédéterminée dans le moule négatif (16), une enveloppe de support (14) est enfilée sur l'ébauche de tuyau (12) et est introduite conjointement avec l'ébauche de tuyau (12) et le mandrin (10) se trouvant à l'intérieur dans un moule négatif (16) adapté au diamètre extérieur de l'enveloppe de support (14),
b) l'enveloppe de support (14) utilisée est un élastomère,
c) le diamètre intérieur de l'enveloppe de support (14) dans l'état détendu est inférieur au diamètre extérieur de l'ébauche de tuyau (12) et l'enveloppe de support (14) est gonflée par soufflage lorsqu'elle est enfilée sur l'ébauche de tuyau (12) et est détendue après l'enfilage, ce qui fait que la surface intérieure de l'enveloppe de support (14) s'applique avec pression sur la surface extérieure de l'ébauche de tuyau (12) et
d) l'ébauche de tuyau (12) dans le moule négatif (16) est vulcanisée sans pré-vulcanisation préalable en une seule passe de travail et après son retrait du moule négatif (16), l'enveloppe de support (14) est ensuite enlevée.

2. Procédé selon la revendication 1, **caractérisé en ce qu'**une feuille est extrudée sur le mandrin (10) avant l'application de l'ébauche de tuyau (12), cette feuille étant connectée à l'ébauche de tuyau (12) et subsistant après que l'on a enlevé le mandrin (10) dans le tuyau coudé.

3. Procédé selon l'une quelconque des revendications 1 ou 2, **caractérisé en ce que** l'on utilise comme mandrin (10) un mandrin creux et l'ébauche de tuyau (12) est également sollicitée en température et en pression depuis le côté intérieur du mandrin (10) avec le fluide porteur utilisé pour la vulcanisation.

4. Procédé selon l'une quelconque des revendications 1 à 3, **caractérisé en ce que** l'ébauche de tuyau (12) est préchauffée avec le mandrin (10) se trouvant à l'intérieur et l'enveloppe de support (14) avant son introduction dans le moule négatif (16).

5. Procédé selon l'une quelconque des revendications 1 à 4, **caractérisé en ce que** lors de la réalisation du mandrin (10) se trouvant à l'intérieur sous la forme d'un mandrin creux, l'ébauche de tuyau (12) est préchauffée avec le mandrin (10) et l'enveloppe de support (14) avant l'introduction dans le moule négatif (16) par un dispositif de chauffage enfoncé dans le mandrin creux ou par un fluide caloporteur s'écoulant à travers le mandrin creux.

6. Procédé selon l'une quelconque des revendications 1 à 5, **caractérisé en ce que** l'on utilise comme matériau pour l'enveloppe de support (14) un caoutchouc acrylonitrile-butadiène.
